# EUROPEAN PATENT SPECIFICATION

(11) **EP 0 781 100 B1**
(45) Date of publication and mention of the grant of the patent: **19.07.2000**
(21) Application number: 95931322.2
(22) Date of filing: 15.09.1995
(51) Int. Cl.: A23K 1/16, A23K 1/18

(54) **ANIMAL FEEDSTUFFS AND ADDITIVES**
FUTTERMITTEL UND FUTTERZUSATZMITTEL
ALIMENTS POUR ANIMAUX ET ADDITIFS

(30) Priority: 16.09.1994 GB 9418752
(43) Date of publication of application: 02.07.1997
(73) Proprietor: AIR PRODUCTS AND CHEMICALS, INC., Allentown, PA 18195-1501 (US)
(72) Inventor: CHANDLER, Peter, John, Norton Cleveland TS20 1BU (GB)
(74) Representative: Burford, Anthony Frederick
(86) International application number: GB9502173
(87) International publication number: WO9608168

(56) References cited:
- EP-A- 0 158 120
- WO-A-94/14335
- WO-A-94/15480
- GB-A- 1 426 856
- US-A- 4 948 589
- US-A- 5 093 128
- US-A- 5 190 775
- US-A- 5 314 852
- PATENT ABSTRACTS OF JAPAN vol. 13 no. 182 (C-591) ,27 April 1989 & JP,A,01 010947 (SHOWA DENKO KK) 13 January 1989,

## Description

This invention relates to animal feedstuff additives, particularly ruminant feedstuff additives, their manufacture, feedstuffs containing them and methods of animal husbandry, particularly of ruminants, using the compositions.

It is known to include choline as a dietary supplement in feed for domesticated animals such as pigs and poultry. Such choline supplements are usually of choline chloride supported on an inert carrier such as corn husks or silica to give free flowing granules. CA-A-0943460 describes free flowing granules containing choline chloride made by spray drying an aqueous solution containing choline chloride and a fatty acid soap, e.g. the sodium salt of a mixture of C₁₆ and C₁₈ fatty acids.

B K Sharma *et al* (Journal of Dairy Science, Vol 71, No 9, 1988) describe that direct addition of choline into the abomasum of a ruminant such as a cow, produced higher yields of milk fat compared with the direct addition of methionine. However, in ruminants choline is destroyed by the microorganisms in the rumen and choline in feed is destroyed before it can be absorbed in the intestine. Thus, adding choline to feed is not an effective way of supplementing the diet of ruminants. GB-A-2005537 describes rumen protected pellets in which a core material is enclosed in a polymeric coating. The core material includes an active agent, e.g. methionine, and a basic material to raise the core material pH above 5 pH. An inert inorganic substance such as clay, may be included to adjust the density. The protective polymeric coating includes a polymer and when the active agent is acidic and water soluble may also include up to 50% by weight of a hydrophobic substance. GB-A-1387038 describes pelleted materials containing an active agent such as glucose, with a protective coating of a mixture of saturated and unsaturated fatty acids, or their salts.

US-A-5,190,775 discloses ruminant feedstuff additive particles having a core comprising choline chloride, especially 70% choline chloride on a cereal carrier, encapsulated within a hydrophobic coating with a surfactant applied to the coating surface to ensure that the particles do not float in the rumen. A high density additive such as kaolin or particulate iron can be incorporated into the pellets to adjust their density. Any hydrophobic coating which is insoluble and impermeable in the rumen but dissolves or becomes permeable in the abomasum or subsequent intestinal tract may be used. The specified coatings comprise hydrogenated vegetable oils, preferably hydrogenated soybean oil, and other vegetable or animal-derived fats and waxes.

US-A-4,948,589 discloses a ruminant feedstuff additive comprising coated granules prepared by granulating choline (or a derivative thereof) having an average particle size of 100 to 150 µm, an excipient having an average particle size of 10-20 µm and a hydrophobic binder to obtain spherical granules of 0.5-2.5 mm and coating these granules with 20 to 40% by weight (based on the uncoated granule weight) of a heated molten mixture of a hydrophobic overcoating agent and a solubility modifier in the form of a fine particle in a weight ratio of 1:0.1 -1:1. The binder and hydrophobic overcoating agent can be identical materials and specified binders and hydrophobic overcoating agents include palmitic acid and stearic acid. In all of the exemplified granules, the binder and hydrophobic overcoating agent is hydrogenated tallow.

WO-A-94/14335 discloses a ruminant feedstuff additive comprising granules having a core containing a physiologically active substance coated with first and second coatings. The first coating is of a C₁₂-C₂₂ fatty acid or ester, an animal or vegetable fat or fatty oil, a hardened animal or vegetable fat or fatty oil, a wax, or a mixture thereof. The second coating is of laminated tabular crystals of a substance which is sparingly water-soluble under neutral conditions but readily water-soluble under acidic conditions and have an average particle size of 5 to 30 µm. Specified active substances include choline panothentate and choline chloride. The core can include, for example, excipients and binders. An exemplified core is formed by granulating choline chloride, calcium carbonate, silicon dioxide and extremely hardened beef tallow in the weight ratio 1000:100:100:510 and was coated with molten extremely hardened beef tallow and tabular crystals of secondary calcium phosphate dihydrate having a particle size of 10 µm in a proportion of 2:3 by weight to a coating ratio of 23% by weight.

WO-A-94/15480 (D4) discloses a ruminant feedstuff additive comprising one or more choline-containing liquid cores encapsulated in a shell of a composition which protects the choline compound against metabolism by bacteria in the rumen. Specified shell compositions include free fatty acids but the only exemplified additive is formed by encapsulating 70% choline chloride solution in hydrogenated beef tallow. There is no disclosure of absorption of the choline (compound) on any carrier.

We have found that direct mixing of choline for example as choline chloride, with a fatty acid does not prevent destruction of the choline in the rumen when fed as part of a dietary supplement and that using alkali or alkaline earth metal soaps of the fatty acid(s) does not give a feedstuff additive having adequate resistance to degradation in the rumen.

Surprisingly, we have now found that a feedstuff additive including a choline compound may be adequately protected from destruction in the rumen by absorbing the choline compound on a suitable carrier and then coating the carrier with a protective matrix including at least one fatty acid or fatty acid soap.

Accordingly, the present invention provides a ruminant feedstuff additive, which comprises a post-ruminally effective choline compound releasably absorbed on an acceptable carrier having liquid-absorbent pores, coated by or dispersed within a protective matrix having a melting point of at least 40°C, the matrix being made up of one or more water insoluble fatty acid(s) or fatty acid salt(s), the protective matrix comprising at least 35% by weight of the additive.

The invention also provides a ruminant feedstuff which includes a feedstuff additive of the invention typically in combination with other dietary materials. The invention further includes a method of animal husbandry which comprises feeding to a ruminant a feedstuff additive or a ruminant feedstuff of the invention.

The invention includes a method of preparing a feedstuff additive of the invention comprising releasably supporting the choline compound on the acceptable carrier and incorporating the releasably supported choline compound within the protective matrix.

The acceptable carrier is typically an absorbent relatively inert material having pores that can absorb liquid. Suitable materials include inorganic materials, such as hydrophilic silica, diatomaceous earth, bentonite and other clays and lime (CaCO₃), and organic materials, including cellulosic materials, particularly cellulosic residues of processed vegetable matter such as corn (maize) cobs, coconut husk, bagasse, sugar beet fibre and dried grape skins. Particulate precipitated hydrophilic silica and/or ground corn cobs are particularly suitable carriers. Suitable cellulosic carriers are typically residues from the treatment of agricultural products and commercially are often dried before sale. With such dried cellulosic carriers, we have found it advantageous to wet the carrier to improve its hydrophilicity prior to supporting the choline compound on it. The carrier will typically have a particle size of from 30 to 500 µm, more usually from 50 to 250 µm.

The post-ruminally effective choline compound used in the additive composition can be any that provides a physiologically acceptable source of choline to a ruminant. Suitable compounds include choline chloride, choline dihydrogen citrate, tricholine citrate and choline bitartrate. Choline chloride is readily available and has a high specific choline content and is a particularly suitable choline compound for use in this invention. Solid choline chloride is a deliquescent crystalline material and is very soluble in water (about 80 g.100 ml⁻¹ at 20°C). Solutions of choline chloride in water are very nearly neutral. A near saturated aqueous solution of choline chloride e.g. about 75% by weight, is a convenient source of choline chloride in making the additive composition of the invention. Aqueous choline chloride solution at a concentration of about 75% by weight and having a pH of from 6 to 8 is the normal form of choline chloride sold and transported in commerce. Typically the choline compound will be used in an amount of from 40 to 70%, more usually from 40 to 60%, and very suitably about 50% by weight of the combined weight of carrier and choline compound.

The protective matrix has a melting point of at least 40°C, preferably from 40 to 65°C, for example from 50°C to 60°C, and is formed from one or more fatty acids and/or fatty acid salts. A suitable matrix is one which is a solid under ambient conditions to give an additive with an easily handled form and is resistant to the environment within the rumen. It is important that the matrix is not only resistant to attack by the microorganisms and chemicals in the rumen but is also able to retain its physical integrity. The physical integrity of the matrix depends on the temperature and typical matrix materials are solid under ambient conditions, soften as the temperature increases and eventually melt. The matrix material used in the invention has a melting temperature of at least 40°C as the typical rumen temperature is about 40°C. Materials with lower melting temperatures do not provide effective protection to the supported choline in the rumen. Suitable fatty acids for use in the protective matrix include palmitic acid, stearic acid, mixtures containing them e.g. those in some naturally occurring oils, and their salts. The protective matrix may also be formed from mixtures of fatty acids which include unsaturated acids such as oleic acid, e.g. as found in palm oil, provided that the melting temperature of the matrix is at least 40°C. Saturated fatty acids generally have higher melting points than the corresponding unsaturated acids. Thus, an initially unsatisfactory unsaturated fatty acid or mixture may be hydrogenated to give a fatty acid or mixture having a suitably higher melting temperature. The protective matrix can be wholly of the fatty acid, a mixture of fatty acid and fatty acid salt or of fatty acid salt. Where the matrix includes fatty acid salts, either the salts will themselves be insoluble or the proportion of salt will not be such that its solubility causes failure of protection by the fatty acid(s). As is described below, small proportions of soluble salts may make the fatty acid matrix less susceptible to disruption in the rumen by plasticising the matrix.

The amount of protective matrix in the additive composition is at least 35% but usually will not be more than 80% by weight of the additive composition. More usually, the amount is from 35 to 60%. Amounts less than about 35% do not give satisfactory protection in the rumen to the choline compound. Amounts above about 80% limit the amount of choline compound that can be included in the additive. We have found that, where the protective matrix is from 35 to 50% of the weight of the feedstuff additive typically up to 50% of the choline compound is available for post-ruminal assimilation and where the protective matrix is from 50 to 60% of the weight of the feedstuff additive up to 90% of the choline compound is available for post-ruminal digestion.

The additive composition contains the choline compound releasably supported on an acceptable carrier. In order to achieve adequate protection of the choline from degradation in the rumen, the supported choline compound will usually be prepared before coating by or incorporation into the matrix. Incorporation within or coating by the protective matrix of the supported choline compound may be carried out by mixing the supported choline compound with heated molten protective matrix material and thereafter cooling and solidifying the mixture to form the desired additive composition. One effective way of doing this is to continue to heat the supported choline compound and molten protective matrix material during mixing so that free water present is evaporated from the mixture. Alternatively, the supported choline compound and protective matrix may be coextruded under conditions such that the protective matrix softens sufficiently to allow satisfactory incorporation of the supported choline compound within the matrix material. Other techniques that can be used include pellet milling and granulation. If the choline compound is not supported on the carrier prior to incorporation into the matrix material the protection of the choline compound may end up at least in part not being supported on the carrier and this will usually mean that it is not adequately protected from degradation in the rumen.

We have obtained good results if the choline compound is supported on the carrier initially as an aqueous solution e.g. by mixing a solution of the choline compound with the carrier, or as a wetted solid e.g. by pre-wetting the support before mixing it with the choline compound. As is noted above, pre-wetting is particularly suitable for cellulosic carriers, which otherwise may not be thoroughly wetted by the choline compound solution and may thus not absorb it into the pores of the carrier. After the initial mixing 'in the wet' the choline compound on the carrier can be dried before or during dispersion in the protective matrix e.g. by heating with the molten fatty acid as described above. We believe that this approach results in the choline compound being held within the surface pores of the support and that the fatty acid caps the pores as well as providing a bulk matrix or coating.

In a particularly advantageous aspect of the invention, we have found that by using an alkaline solution of choline compound (as compared with the choline compound solutions of commerce) to make the supported choline compound on the carrier, the protection of the choline compound can be much more effective. We believe that this is because the alkali, which will be present in the pores of the carrier, reacts with the fatty acid to form a soap which caps the pores of the carrier. This appears to be more effective in protecting the choline compound than the fatty acid pore caps referred to above. The presence of fatty acid soaps, particularly alkali metal soaps, is further beneficial in that they appear to plasticise the fatty acid matrix. This can make the matrix both less likely to fracture under mechanical working in the gut, enabling a larger proportion of matrix to be usefully employed, and less susceptible to penetration by the contents of the rumen. These effects increase further the effectiveness of the protection of the choline compound from degradation in the rumen.

The amount of alkali needed to achieve this effect (however it works) is not large. We have obtained good results just by adding sodium hydroxide to raise the pH of choline chloride solution to above 11. Other alkali materials can be used particularly alkali and alkali earth metal hydroxides and carbonates. The molar proportion used will typically correspond to the amount of sodium hydroxide indicated above. We believe that the final pH of the choline compound is not critical (some alkali materials cannot achieve pH's as high as 11). Where the carrier is lime, of course, this is itself alkali and adding alkali to the choline compound solution is not necessary to form a soap pore cap. Nevertheless it may be useful to include alkaline metal alkali to provide the corresponding soap in the fatty acid matrix. This possibility forms a separate and advantageous aspect of the invention.

Accordingly, the invention includes a ruminant feedstuff additive, which comprises a post-ruminally effective choline compound releasably absorbed on an acceptable carrier having liquid-absorbing pores, coated by or dispersed within a protective matrix having a melting point of at least 40°C, the matrix being made up of one or more water insoluble fatty acid(s) and comprising at least 35% by weight of the additive and wherein the choline compound is held in pores in the carrier which pores are capped by a fatty acid alkali or alkali earth metal soap within the matrix.

Desirably in this aspect of the invention, the fatty acid matrix includes a small proportion of a fatty acid soap, particularly an alkali metal fatty acid soap. The alkali metal soap appears to act to plasticise the fatty acid matrix and improve its protective properties as referred to above. Of course, the amount of alkali metal soap included in the matrix will not be so high as to make the matrix sufficiently water soluble or dispersible as to lessen the protection of the choline compound. We believe that even the small amounts of alkali included in the choline compound solution to adjust its pH in this aspect of the invention can give beneficial plasticising effects.

The amount of water soluble fatty acid soap included in the matrix will usually be at least 0.1% and more usually at least 0.25% by weight of the matrix as lower proportions have very little effect. The proportion of water soluble soap will not usually be more than 5% by weight of the matrix as such higher levels can make the matrix sufficiently water soluble (even if only by leaching of the soap) that the protection of the choline from the contents of the rumen is reduced. For optimum effect the proportion of such soap will not usually be more than 2% by weight of the matrix even when relatively high proportions of choline compound are used. For typical choline (as chloride) levels in the feedstuff additive of about 25% by weight, the level of water soluble fatty acid soap will usually be about 1% by weight of the matrix. At lower levels of choline, the weight percentage on the matrix will usually be somewhat lower based on the matrix but may be higher than the 1:25 ration based on the choline compound indicated above.

In addition to the post-ruminally effective choline compound the feedstuff additive may contain additives for example amino acids, such as methionine, vitamins and minerals which are also desired to be available post-ruminally to the ruminant.

From the figures given above, typical and preferred quantitative compositions of the feedstuff additive are given below:

| Material | wt % of feedstuff additive | |
|---|---|---|
| | typical | preferred |
| matrix | 35 to 80 | 50 to 60 |
| supported choline compound | 20 to 65 | 40 to 50 |
| carrier | 6 to 40 | 16 to 30 |
| choline compound | 8 to 45 | 16 to 30 |

The invention includes feedstuff compositions including the additive of the invention. The additive itself can be included in feed given to ruminants e.g. in the form of pellets mixed with pellets of conventional feedstuff. Alternatively, the additive can be incorporated, along with other feedstuff components, into a uniform feedstuff for feeding to ruminants. A particular end use we envisage for the additive and feedstuffs of this invention, is in enhancing milk yields especially in cows. Generally, in this end use, the optimum amount of choline (as chloride) supplied to a cow is typically about 35 g.day⁻¹. The amount and or concentration of the additive needed to achieve this, or another desired, feeding rate can readily be calculated. An additional benefit of the additive of this invention, particularly as compared with additives in which the choline is protected with a polymeric coating, is that the protective matrix provides useful nutritional values, particularly as calories. As feedstuffs often include fats and/or oils as components of the feedstuff, the nutritional value of the fatty acid material used as the protective matrix will generally reduce the amount of other fatty materials necessary to provide the desired nutritional values.

The invention is illustrated by the following Examples. All parts and percentages are by weight unless otherwise specified and for compositions are on a dry basis (except for solution concentrations).

In the Examples the choline was provided as choline chloride in one of the following forms:
- CC: 75% aqueous choline chloride solution.
- CP: corn premix made by mixing crushed corn (maize) cob carrier with CC solution and containing about 50% w/w choline chloride.
- WCP: wetted corn premix made by mixing pre-wetted crushed corn (maize) cob carrier with CC solution and containing about 50% w/w choline chloride.
- SP: silica premix made by mixing hydrophilic particulate silica with CC solution and containing about 50% w/w choline chloride. The silicas used were Tixosil 34A from Rhone Poulenc, Sipemat 22 from Degussa and Hisil HOA from PPG. There was no noticeable difference between the various silicas.
- ASP: silica premix as SP but made with choline chloride solution with the pH adjusted using NaOH to 12.85.
The CP, WCP, SP and ASP premixes were all free flowing powders as the support readily absorbs the choline chloride solution.

In testing some of the compositions as described below a simulated rumen was used. The simulated rumen is a stirred solution of 1M ammonium acetate solution held at 40°C. Despite the apparent simplicity of this model, we have found that it gives results in testing for protection of choline chloride from dissolution into the liquid continuous phase from a feed additive that correspond fairly well with results obtained *in vivo* in cattle rumens.

### Example 1 to 5 and C1 to C4

These examples illustrate the incorporation of choline chloride into fatty acid or fatty acid soap matrix materials. Choline chloride, in one of the forms listed above, was incorporated into a protective matrix of either palmitic acid or the calcium palmitate (soap).

### Example C1

Molten palmitic acid (90 g; mp 63°C) in a 250 ml glass beaker was stirred using a 4-blade impeller driven by a Heidolf Laboratory stirrer. CC solution (13.3 g; containing 10 g choline chloride) was added, to give a choline content of 10% by weight of the overall composition. The mixture was heated and stirred to remove free water. During heating the choline chloride formed a separate lower layer, which disappeared on cooling. After cooling, the composition was vacuum dried. The dried composition was very sticky and did not form separable particles. Attempts to grind the dried composition to form definite particles were unsuccessful. Varying the stirring speed from 35 to 250 r.p.m. (ca. 0.6 to ca. 4 Hz) speeded the preparation but did not otherwise alter the form of the product. It was not practical to test this product further or a similar product made with twice the amount of CC solution.

### Example C2

CC solution (16.4 g) was added to palmitic acid (102.4 g) and the mixture heated to melt the acid. Initially the CC solution formed a layer below the molten acid, but the two layers lowly merged on further heating. Calcium hydroxide (14.8 g) was added to the mixture. The resulting composition, which had a choline content of 10% w/w, was lumpy and non-uniform in appearance. As in Example C1, it was not practical to test this material further.

### Example C3

Calcium palmitate was prepared by melting palmitic acid (102.4 g) and adding calcium hydroxide (14.8 g) with slow stirring and CC solution (16.4 g) was then added. The CC solution remained separate until heated further, when some of the solution was absorbed. On cooling it was noted that the choline chloride was separated from the calcium palmitate. As in Examples C1 and C2, it was not practical to test this material further.

### Example 1

Molten palmitic acid (60 g; mp 63°C) in a 250 ml glass beaker was stirred as described in comparative Example C1. Silica Premix (SP) (40 g; containing 20 g choline chloride) was added, to give a choline content of 20% by weight of the overall composition. The mixture was heated and stirred to remove the water present and was then cooled and vacuum dried. The product was in the form of separate particles with an outside coating of the fatty acid.

### Example 2

Example 1 was repeated but substituting an equal weight of corn premix (CP) for the silica premix used in Example 1. During cooling some separation of the premix occurred. Apart from this the product appeared much like that of Example 1.

### Example 3

a) Silica premix (SP) (74 g) was added to solid palmitic acid (102.4 g) and the mix was heated to melt the acid. Ca(OH)₂ (14.8 g) was then added to convert the acid into the calcium salt. Addition of the calcium hydroxide was difficult because a substantially immobile mass formed. The mixture was heated to remove the water present and then cooled. The resulting composition containing 20% by weight of choline chloride, was non-uniform in appearance.
b) Example 3a) was repeated except that the amount of silica premix used was sufficient to give a composition containing 10% by weight of choline. The mixing and appearance of the product were similar to Example 3a.

### Example 4

Molten palmitic acid (60 g; mp 63°C) in a 250 ml glass beaker was stirred as described in comparative Example C1. Pre-wetted corn premix (WCP) (40 g; containing 20 g choline chloride) was added, to give a choline content of 20% by weight of the overall composition. The mixture was heated and stirred to remove the free water present. The mixture was cooled and vacuum dried. The dried composition was in the form of separate particles with an outside coating of the fatty acid.

### Example 5

Example 4 was repeated but using 80 g palmitic acid and 20 g of pre-wetted corn premix (WCP). The product was of similar appearance to that of Example 4.

### Example C3

a) Palmitic acid (10 g) was melted in the presence of silica premix (SP) (90 g). After stirring and cooling the resulting composition was uniform and free from lumps
b) Example C3a was repeated using 15 g palmitic acid and 85 g silica premix. The product appeared similar to that of Example C3a.
c) Example C3a was repeated using 20 g palmitic acid and 80 g silica premix. The product appeared similar to that of Example C3a except that globules were noted on the surface of the composition.

### Example C4

Parts a, b and c of Example C4 were repeated but using wetted corn premix (WCP) instead of the silica premix in Example C4. The products appeared similar to those of Example C3.

The products of Examples 1 to 5 and comparative Examples C3 and C4 were tested for their ability to protect the choline as follows :
A 0.5 g sample of each composition was dispersed into 50 ml of glacial acetic acid to give a suspension which was titrated until neutral with 0.1 M perchloric acid using a methyl violet indicator. 10 ml of mercuric acetate (6 g in 100 ml glacial acetic acid) was then added. The samples were then stirred for 90 minutes with subsequent retitration using perchloric acid. The amount of choline released into the titration medium was calculated from the titration results and expressed as a percentage loss of choline chloride from the composition.
The compositions and results of testing are set out in Table 1 below. From the results given in Table 1, it can be seen that palmitic acid can give effective protection to choline chloride supported on a carrier, but that the protection is not effective if the amount of the protective matrix is too small. Also palmitic acid appears to be more effective than calcium palmitate in protecting the choline. The best results were obtained using a wetted corn premix and a suitably high proportion of palmitic acid as the protective matrix.

### Example C5

A commercially available composition containing 25% w/w choline on a silica support protected with a matrix of a mixture of C₁₂ to C₂₂ saturated and unsaturated vegetable fatty acids, having a melting point of less than 40°C was tested in the simulated rumen to measure the rate of dissolution of i choline and this was compared with the rate from a comparable, but unprotected, silica premix. The results showing the percentage of choline removed from both the known composition and unprotected premix with time are given in Table 2 below. These results indicate that the commercially available material affords little protection against decomposition in the rumen for the choline in it and that the amount of choline retained within the composition for post-ruminal assimilation was negligible.

Further samples of the commercially available composition were implanted into the rumen of a number of cattle, under veterinary supervision. The choline remaining in the composition after predetermined times in the rumen were measured and choline loss calculated. The loss of choline from the samples with time is set out in Table 3 below. These results confirm that the commercially available composition rapidly looses virtually all its choline in a short time in the rumen and that very little, if any, remains for post-ruminal absorption.

### Example 6

A series of compositions were prepared by intimately incorporating a wetted corn premix (WCP) into a molten mixture of fatty acids (palmitic acid 45%, stearic acid 40%, oleic acid 10%, C₁₄ and below -2%, C₂₀ and above - 3%; melting point about 59°C) as protective matrix. Compositions containing 5, 10 and 50% by weight of the matrix were satisfactorily formed with the corresponding percentage of corn premix. Each composition was pelleted by pouring the molten composition into a suitable mould and applying a pressure of 50 MPa until solidification occurred. The structure of the pellets so formed was maintained even during subsequent handling. The dissolution of choline from samples of these pellets was determined by placing pellets of each composition into a simulated rumen. After varying periods of time the amount of choline lost from the pellets was determined. The results are set out in Table 4 below. These data indicate that a protective matrix content of 50% by weight affords substantial protection to the choline present, but that lower levels of fatty acid matrix did not afford effective protection.

### Example 7

Compositions were prepared by intimately incorporating 50% by weight of a) silica premix (SP), and b) alkali silica premix (ASP), into 50% by weight of a molten protective matrix of the same mixture of fatty acids used in Example 6. The bulk mixtures were allowed to cool and solidify and were then cut up into ca. 1 cm³ lumps. Samples of the lumps were tested for their ability to protect the choline in the simulated rumen for 30 and 120 minutes. The percent choline loss is shown in Table 5 below from which the improvement in the protection of the choline is evident.

### Example 8

Further samples were prepared as cut 1 cm³ lumps as described in Example 7 based on a) silica premix (SP), and b) alkali silica premix (ASP). A proportion of each sample was ground to a coarse powder having a particle size of ca 1 mm. The four samples were then tested for their ability to protect the choline in the simulated rumen for 120 minutes. The results are given in Table 6 below. These results indicate that the increase in the surface area of the powder samples results in increased choline loss, but the difference between the samples based on ASP show that the difference is small, suggesting that this form of the feedstuff will have increased resistance to mechanical working in the rumen as compared with the samples based on SP.

**Table 1**

| | Additive Composition | | | | | % Choline Loss |
|---|---|---|---|---|---|---|
| Ex No | Matrix | | Carrier | | Choline | |
| | Material | % | Material | % | % | |
| C3a | Palmitic Acid | 10 | CP | 45 | 45 | 95 |
| C3b | Palmitic Acid | 15 | CP | 42.5 | 42.5 | 91 |
| C3c | Palmitic Acid | 20 | CP | 40 | 40 | 85 |
| C4a | Palmitic Acid | 10 | SP | 45 | 45 | 84 |
| C4a | Palmitic Acid | 15 | SP | 42.5 | 42.5 | 93 |
| C4c | Palmitic Acid | 20 | SP | 40 | 40 | 83 |
| 1 | Palmitic Acid | 60 | SP | 20 | 20 | 52 |
| 2 | Palmitic Acid | 60 | CP | 20 | 20 | 64 |
| 3a | Calcium Palmitate | 60 | CP | 20 | 20 | 69 |
| 3b | Calcium Palmitate | 80 | CP | 10 | 10 | 68 |
| 4 | Palmitic Acid | 60 | WCP | 20 | 20 | 46 |
| 5 | Palmitic Acid | 80 | WCP | 10 | 10 | 29 |

**Table 2**

| Time (minutes) | % Removed | |
|---|---|---|
| | Protected | Non-Protected |
| 0 | 0 | 0 |
| 15 | 85.5 | 98.7 |
| 30 | 87.6 | 98.2 |
| 60 | 89.6 | 98.2 |
| 180 | 94.8 | 98.9 |
| 360 | 96.3 | 99.1 |
| 1440 | 98.9 | 100 |

**Table 3**

| Time (minutes) | 2 | 60 | 150 |
|---|---|---|---|
| % Removed | 90.9 | 99.8 | 99.92 |

**Table 4**

| Time (minutes) | % Choline Removed | | | |
|---|---|---|---|---|
| | Protective Matrix (%) | | | |
| | 0 | 5 | 10 | 50 |
| 0 | 0 | 0 | 0 | 0 |
| 30 | 107 | 76 | 83 | 14 |
| 60 | 107 | 96 | 96 | 22 |
| 240 | 110 | 98 | 103 | 17 |

**Table 5**

| Ex No | Choline loss (%) after | |
|---|---|---|
| | 30 min | 120 min |
| 7a | 44 | 48 |
| 7b | 24 | 36 |

**Table 6**

| Ex No | Particle size | Choline loss (%) after 120 min |
|---|---|---|
| 8a | powder | 78 |
| | lumps | 54 |
| 8b | powder | 36 |
| | lumps | 33 |

## Claims

1. A ruminant feedstuff additive, which comprises a post-ruminally effective choline compound releasably absorbed on an acceptable carrier having liquid-absorbent pores, coated by or dispersed within a protective matrix having a melting point of at least 40°C, the matrix being made up of one or more water insoluble fatty acid(s) or fatty acid salt(s), the protective matrix comprising at least 35% by weight of the additive.

2. A feedstuff additive as claimed in Claim 1, wherein the carrier is one or more of hydrophilic silica, diatomaceous earth, clay and lime or cellulosic residues of processed vegetable matter.

3. A feedstuff additive as claimed in Claim 2, wherein the carrier is precipitated hydrophilic silica and/or ground corn cobs.

4. A feedstuff additive as claimed in Claim 2, wherein the carrier is lime.

5. A feedstuff additive as claimed in any one of the preceding claims, wherein the carrier has a particle size of from 30 to 500 µm.

6. A feedstuff additive as claimed in Claim 5, wherein the carrier has a particle size of 50 to 250 µm.

7. A feedstuff additive as claimed in any one of the preceding claims, wherein the fatty acid of the water insoluble fatty acid(s) or fatty acid salt(s) is one or more of palmitic and stearic acids.

8. A feedstuff additive as claimed in any one of the preceding claims, wherein the protective matrix comprises from 35% to 80% by weight of the additive composition.

9. A feedstuff additive as claimed in Claim 8, wherein said amount of protective matrix comprises from 50 to 60% by weight of the additive composition.

10. A feedstuff additive as claimed in any one of the preceding claims, wherein the protective matrix softens at a temperature of from 40 to 65°C.

11. A feedstuff additive as claimed in any one of the preceding claims, wherein the choline compound is one or more of choline chloride, choline dihydrogen citrate, tricholine citrate and choline bitartrate.

12. A feedstuff additive as claimed in any one of the preceding claims, which contains from 16 to 30% of the choline compound.

13. A feedstuff additive as claimed in any one of the preceding claims, wherein the choline compound is used in an amount of 40 to 60% by weight of the combined weight of carrier and choline compound.

14. A feedstuff additive as claimed in Claim 13, wherein said amount is about 50% by weight of the combined weight of carrier and choline compound.

15. A feedstuff additive as claimed in any one of the preceding claims, wherein the matrix includes from 0.25 to 2% by weight of a water soluble fatty acid soap.

16. A feedstuff additive as claimed in any one of the preceding claims, wherein the pores in the carrier are capped by a fatty acid alkali or alkaline earth salt within the matrix.

17. A feedstuff additive as claimed in Claim 16, wherein the matrix is made up of one or more water insoluble fatty acid(s) and from 0.1 to 5% by weight of a water soluble fatty acid soap.

18. A feedstuff additive as claimed in Claim 16 or Claim 17, wherein said cap is formed by *in situ* reaction between a fatty acid matrix and alkali in the carrier.

19. A feedstuff additive as claimed in Claim 18, wherein the carrier is alkaline.

20. A feedstuff additive as claimed in Claim 18 or Claim 19, wherein alkali is present with the adsorbed choline compound.

21. A feedstuff additive as claimed in any one of the preceding claims, wherein the carrier is a cellulose material which has been pre-wetted, contacted with an aqueous solution of the choline compound and then dried to releasably absorb the choline compound in the carrier pores.

22. A method of making a ruminant feedstuff additive as claimed in any one of the preceding claims, which comprises releasably supporting the post-ruminally effective choline compound on the carrier, and subsequently incorporating the supported choline compound within the protective matrix.

23. A method as claimed in Claim 22, wherein the choline compound is supported on the carrier by mixing an aqueous solution of the choline compound with the carrier.

24. A method as claimed in Claim 23, wherein aqueous solution is alkaline.

25. A method as claimed in Claim 24, wherein the carrier is pre-wetted prior to contact with the choline compound.

26. A method as claimed in Claim 25, wherein the carrier is a cellulose material and an aqueous solution of the choline is contacted with the pre-wetted carrier.

27. A method as claimed in any one of Claims 22 to 26, wherein the supported choline compound is mixed with molten protective matrix while heating to evaporate free water from the mixture and thereafter cooling and solidifying the mixture.

28. A ruminant feedstuff which comprises a feedstuff additive as claimed in any one of Claims 1 to 21 in combination with other dietary materials.

29. A method of animal husbandry which comprises feeding to a ruminant a feedstuff additive as claimed in any one of Claims 1 to 21 or a ruminant feedstuff as claimed in Claim 28.

## Patentansprüche

1. Futtermittelzusatz für Wiederkäuer, der eine postruminal wirksame Cholinverbindung umfaßt, die freisetzbar auf einem annehmbaren Träger mit Flüssigkeit absorbierenden Poren absorbiert ist, beschichtet durch oder dispergiert in einer Schutzmatrix mit einem Schmelzpunkt von mindestens 40 °C, wobei die Matrix aus einer oder mehreren wasserunlöslichen Fettsäure(n) oder Fettsäuresalz(en) besteht und wobei die Schutzmatrix mindestens 35 Gew.-% des Zusatzes umfaßt.

2. Futtermittelzusatz gemäß Anspruch 1, worin es sich bei dem Träger um einen oder mehrere von hydrophilem Silica, Diatomeenerde, Ton und Kalk oder cellulosischen Resten von verarbeitetem pflanzlichen Material handelt.

3. Futtermittelzusatz gemäß Anspruch 2, worin es sich bei dem Träger um ausgefälltes hydrophiles Silica und/oder zermahlene Maiskolben handelt.

4. Futtermittelzusatz gemäß Anspruch 2, worin der Träger Kalk ist.

5. Futtermittelzusatz gemäß einem der vorstehenden Ansprüche, worin der Träger eine Teilchengröße von 30 bis 500 µm aufweist.

6. Futtermittelzusatz gemäß Anspruch 5, worin der Träger eine Teilchengröße von 50 bis 250 µm aufweist.

7. Futtermittelzusatz gemäß einem der vorstehenden Ansprüche, worin es sich bei der Fettsäure aus den wasserunlöslichen Fettsäure(n) oder Fettsäuresalz(en) um eine oder mehrere von Palmitin- und Stearinsäure handelt.

8. Futtermittelzusatz gemäß einem der vorstehenden Ansprüche, worin die Schutzmatrix 35 Gew.-% bis 80 Gew.-% der Zusatzzusammensetzung ausmacht.

9. Futtermittelzusatz gemäß Anspruch 8, worin die Menge an Schutzmatrix 50 bis 60 Gew.-% der Zusatzzusammensetzung ausmacht.

10. Futtermittelzusatz gemäß einem der vorstehenden Ansprüche, worin die Schutzmatrix bei einer Temperatur von 40 bis 65 °C erweicht.

11. Futtermittelzusatz gemäß einem der vorstehenden Ansprüche, worin es sich bei der Cholinverbindung um eines oder mehrere von Cholinchlorid, Cholindihydrogencitrat, Tricholincitrat und Cholinbitartrat handelt.

12. Futtermittelzusatz gemäß einem der vorstehenden Ansprüche, der von 16 bis 30 % an der Cholinverbindung enthält.

13. Futtermittelzusatz gemäß einem der vorstehenden Ansprüche, worin die Cholinverbindung in einer Menge von 40 bis 60 Gew.-% des vereinigten Gewichts von Träger und Cholinverbindung eingesetzt wird.

14. Futtermittelzusatz gemäß Anspruch 13, worin die Menge etwa 50 Gew.-% des vereinigten Gewichts von Träger und Cholinverbindung beträgt.

15. Futtermittelzusatz gemäß einem der vorstehenden Ansprüche, worin die Matrix 0,25 bis 2 Gew.-% einer wasserlöslichen Fettsäureseife umfaßt.

16. Futtermittelzusatz gemäß einem der vorstehenden Ansprüche, worin die Poren des Trägers mit Kappen aus einem Fettsäurealkali- oder -erdalkalisalz in der Matrix versehen sind.

17. Futtermittelzusatz gemäß Anspruch 16, worin die Matrix aus einer oder mehreren wasserunlöslichen Fettsäure(n) und von 0,1 bis 5 Gew.-% einer wasserlöslichen Fettsäureseife hergestellt ist.

18. Futtermittelzusatz gemäß Anspruch 16 oder Anspruch 17, worin die Kappen durch in situ-Umsetzung der Fettsäurematrix mit Alkali im Träger gebildet werden.

19. Futtermittelzusatz gemäß Anspruch 18, worin der Träger alkalisch ist.

20. Futtermittelzusatz gemäß Anspruch 18 oder Anspruch 19, worin Alkali mit der adsorbierten Cholinverbindung vorhanden ist.

21. Futtermittelzusatz gemäß einem der vorstehenden Ansprüche, worin der Träger ein Cellulosematerial ist, das vorbenetzt wurde, mit einer wäßrigen Lösung der Cholinverbindung in Kontakt gebracht und anschließend getrocknet wurde, um die Cholinverbindung in den Poren des Trägers freisetzbar zu absorbieren.

22. Verfahren zur Herstellung eines Futtermittelzusatzes für Wiederkäuer gemäß einem der vorstehenden Ansprüche, welches das freisetzbare Trägern der postruminal wirksamen Cholinverbindung auf dem Träger und anschließendes Einarbeiten der geträgerten Cholinverbindung in die Schutzmatrix umfaßt.

23. Verfahren gemäß Anspruch 22, worin die Cholinverbindung auf dem Träger durch Mischen einer wäßrigen Lösung der Cholinverbindung mit dem Träger geträgert wird.

24. Verfahren gemäß Anspruch 23, worin die wäßrige Lösung alkalisch ist.

25. Verfahren gemäß Anspruch 24, worin der Träger vor dem In-Kontakt-bringen mit der Cholinverbindung vorbenetzt wird.

26. Verfahren gemäß Anspruch 25, worin der Träger ein Cellulosematerial ist und eine wäßrige Lösung des Cholins mit dem vorbenetzten Träger in Kontakt gebracht wird.

27. Verfahren gemäß einem der Ansprüche 22 bis 26, worin die geträgerte Cholinverbindung mit der geschmolzenen Schutzmatrix unter Erwärmen vermischt wird, um freies Wasser aus der Mischung zu verdampfen, gefolgt von Kühlen und Verfestigen der Mischung.

28. Wiederkäuer-Futtermittel, das einen Futtermittelzusatz gemäß einem der Ansprüche 1 bis 21 in Kombination mit anderen Nahrungsmittelmaterialien umfaßt.

29. Verfahren der landwirtschaftlichen Tierhaltung, das das Verfüttern eines Futtermittelzusatzes gemäß einem der Ansprüche 1 bis 21 oder eines Wiederkäuer-Futtermittels gemäß Anspruch 28 an einen Wiederkäuer umfaßt.

## Revendications

1. Additif pour aliments pour ruminants, qui comprend un composé de choline efficace après la rumination absorbé de manière libérable sur un support acceptable ayant des pores absorbants les liquides, enrobé par ou dispersé à l'intérieur d'une matrice protectrice ayant un point de fusion d'au moins 40°C, la matrice étant composée d'un ou plusieurs acide(s) gras ou sel(s) d'acide gras insoluble(s) dans l'eau, la matrice protectrice comprenant au moins 35 % en poids de l'additif.

2. Additif pour aliments tel que revendiqué dans la revendication 1, dans lequel le support est l'un ou plusieurs d'une silice hydrophile, d'une terre de diatomées, d'une argile et d'une chaux ou de résidus cellulosiques de matières végétales traitées.

3. Additif pour aliments tel que revendiqué dans la revendication 2, dans lequel le support est une silice hydrophile précipitée et/ou des épis de maïs broyés.

4. Additif pour aliments tel que revendiqué dans la revendication 2, dans lequel le support est une chaux.

5. Additif pour aliments tel que revendiqué dans l'une quelconque des revendications précédentes, dans lequel le support a une taille des particules de 30 à 500 µm.

6. Additif pour aliments tel que revendiqué dans la revendication 5, dans lequel le support a une taille des particules de 50 à 250 µm.

7. Additif pour aliments tel que revendiqué dans l'une quelconque des revendications précédentes, dans lequel l'acide gras du ou des acide(s) gras ou sel(s) d'acide gras insoluble(s) dans l'eau est l'un ou plusieurs des acides palmitique et stéarique.

8. Additif pour aliments tel que revendiqué dans l'une quelconque des revendications précédentes, dans lequel la matrice protectrice comprend de 35 % à 80 % en poids de composition additive.

9. Additif pour aliments tel que revendiqué dans la revendication 8, dans lequel ladite quantité de matrice protectrice comprend de 50 à 60 % en poids de la composition additive.

10. Additif pour aliments tel que revendiqué dans l'une quelconque des revendications précédentes, dans lequel la matrice protectrice se ramollit à une température de 40 à 65°C.

11. Additif pour aliments tel que revendiqué dans l'une quelconque des revendications précédentes, dans lequel le composé de choline est l'un ou plusieurs d'un chlorure de choline, d'un dihydrogénocitrate de choline, d'un citrate de tricholine et d'un bitartrate de choline.

12. Additif pour aliments tel que revendiqué dans l'une quelconque des revendications précédentes, qui contient de 16 à 30 % du composé de choline.

13. Additif pour aliments tel que revendiqué dans l'une quelconque des revendications précédentes, dans lequel le composé de choline est utilisé dans une quantité de 40 à 60 % en poids du poids combiné du support et du composé de choline.

14. Additif pour aliments tel que revendiqué dans la revendication 13, dans lequel ladite quantité est d'environ 50 % en poids du poids combiné du support et du composé de choline.

15. Additif pour aliments tel que revendiqué dans l'une quelconque des revendications précédentes, dans lequel la matrice inclut de 0,25 à 2 % en poids d'un savon d'acide gras soluble dans l'eau.

16. Additif pour aliments tel que revendiqué dans l'une quelconque des revendications précédentes, dans lequel les pores dans le support sont bouchés par un sel alcalin ou alcalino-terreux d'acide gras à l'intérieur de la matrice.

17. Additif pour aliments tel que revendiqué dans la revendication 16, dans lequel la matrice est composée d'un ou plusieurs acide(s) gras insoluble(s) dans l'eau et de 0,1 à 5 % en poids d'un savon d'acide gras soluble dans l'eau.

18. Additif pour aliments tel que revendiqué dans la revendication 16 ou la revendication 17, dans lequel ledit bouchon est formé par une réaction *in situ* entre une matrice d'acide gras et un produit alcalin dans le support.

19. Additif pour aliments tel que revendiqué dans la revendication 18, dans lequel le support est un produit alcalin.

20. Additif pour aliments selon la revendication 18 ou la revendication 19, dans lequel le produit alcalin est présent avec le composé de choline adsorbé.

21. Additif pour aliments selon l'une quelconque des revendications précédentes, dans lequel le support est une matière cellulosique qui a été préalablement mouillée, mise en contact avec une solution aqueuse du composé de choline et ensuite séchée pour absorber de manière libérable le composé de choline dans les pores du support.

22. Procédé pour préparer un additif pour aliments pour ruminants tel que revendiqué dans l'une quelconque des revendications précédentes, qui comprend la mise de manière libérable sur un support du composé de choline efficace après la rumination, et ensuite l'incorporation du composé de choline porté par le support à l'intérieur de la matrice protectrice.

23. Procédé tel que revendiqué dans la revendication 22, dans lequel le composé de choline est mis sur le support en mélangeant une solution aqueuse du composé de choline avec le support.

24. Procédé tel que revendiqué dans la revendication 23, dans lequel la solution aqueuse est alcaline.

25. Procédé tel que revendiqué dans la revendication 24, dans lequel le support est préalablement mouillé avant d'être mis en contact avec le composé de choline.

26. Procédé tel que revendiqué dans la revendication 25, dans lequel le support est une matière cellulosique et une solution aqueuse de la choline est mise en contact avec le support préalablement mouillé.

27. Procédé tel que revendiqué dans l'une quelconque des revendications 22 à 26, dans lequel le composé de choline porté par le support est mélangé avec la matrice protectrice fondue en chauffant pour évaporer l'eau libre du mélange et ensuite en refroidissant et en solidifiant le mélange.

28. Aliment pour ruminants qui comprend un additif pour aliments tel que revendiqué dans l'une quelconque des revendications 1 à 21 en combinaison avec d'autres matières diététiques.

29. Procédé d'élevage d'animaux qui comprend l'alimentation d'un ruminant avec un additif pour aliments tel que revendiqué dans l'une quelconque des revendications 1 à 21 ou un aliment pour ruminants tel que revendiqué dans la revendication 28.
